# FASCICULE DE BREVET EUROPEEN

(11) **EP 1 497 013 B1**
(45) Date de publication et mention de la délivrance du brevet: **30.05.2007**
(21) Numéro de dépôt: 03747155.4
(22) Date de dépôt: 23.04.2003
(51) Int. Cl.: B01D 53/64, F23J 1/00, F23J 15/04

(54) **PROCEDE ET INSTALLATION D EPURATION DE FUMEES CONTENANT DU M ERCURE**
VERFAHREN UND ANLAGE ZUR REINIGUNG VON QUECKSILBER ENTHALTENDEN ABGASEN
METHOD AND INSTALLATION FOR PURIFICATION OF FUMES CONTAINING MERCURY

(30) Priorité: 24.04.2002 FR 0205134
(43) Date de publication de la demande: 19.01.2005
(73) Titulaire: LAB SA, 69006 Lyon (FR)
(72) Inventeur: GOURMELON, Fabrice, F-69006 Lyon (FR); SIRET, Bernard, F-69008 Lyon (FR)
(74) Mandataire: Schouller, Jean-Philippe
(86) Numéro de dépôt international: PCT/FR2003/001288
(87) Numéro de publication internationale: WO 2003/090907

(56) Documents cités:
- EP-A- 0 381 601
- US-A- 4 617 180
- US-A- 5 575 982
- US-A- 5 695 726

## Description

La présente invention concerne un procédé et une installation d'épuration de fumées contenant du mercure.

Elle se réfère plus particulièrement aux procédés d'incinération et/ou de combustion de combustibles solides ou liquides, et notamment au lavage des résidus solides générés par de tels procédés, quand on utilise un dispositif humide de lavage pour l'épuration des fumées.

Dans l'exemple de l'incinération des ordures ménagères, il est généré pour une tonne d'ordures environ 250 kg de mâchefers, 20 kg de cendres volantes et cendres sous chaudière et 5500 Nm³ de fumées. La quantité de résidus et de gaz dépend bien sûr du type de combustible utilisé et de la proportion relative des mâchefers par rapport aux cendres volantes du type de combustion. Les mâchefers peuvent être souvent réutilisés après lavage ou maturation, par exemple comme matériau de soubassement routier ou comme matériau de construction.

En revanche les cendres volantes, ainsi que les cendres sous chaudière, comportent souvent une fraction importante de métaux ou de composés solubles, et donnent des valeurs trop importantes de métaux, en particulier de métaux lourds, lors de tests de lixiviation. Il est donc nécessaire de les traiter avant d'envisager une valorisation ou même un stockage définitif.

Différents procédés ont été proposés pour effectuer un tel traitement.

Il a par exemple été proposé d'utiliser la purge acide d'un laveur, pour traiter les cendres volantes par lixiviation forcée en phase acide. Le brevet américain 4, 617, 180 propose d'utiliser les purges d'un laveur à condensation pour réaliser cette lixiviation forcée et de retourner les cendres ainsi traitées au four d'incinération.

L'inconvénient de telles méthodes, outre un agencement global assez complexe, réside dans la nécessité d'utiliser des liqueurs acides assez chargées en métaux lourds solubilisés et en éléments traces captés lors de l'épuration des gaz. Il n'est pas alors possible, sans une consommation d'eau neuve assez importante, d'obtenir de bonnes propriétés de lixiviation du résidu traité.

Il a également été proposé, par EP-A-0 381 601, d'utiliser judicieusement une plus faible quantité d'eau en mettant en contact les résidus avec un liquide de lavage dans un bac agité, puis en déshydratant et en filtrant ces résidus avec utilisation d'un liquide de rinçage.

Cette technique, si elle permet d'obtenir des solides ayant de très bonnes propriétés de lixiviation, n'évite pas pour autant lors de la phase de lavage une reprise partielle du mercure capté par le laveur acide. Aussi, les résidus traités ainsi obtenus, s'ils sont satisfaisants du point de vue de la lixiviation, peuvent comporter dans l'absolu suffisamment de mercure pour que leur réutilisation devienne problématique.

L'invention se propose de remédier notamment à cet inconvénient.

A cet effet, elle a pour objet un procédé d'épuration de fumées, dans lequel on sépare au moins une partie des poussières initialement présentes dans ces fumées, on dirige les fumées ainsi dépoussiérées vers un laveur acide, dans lequel on les met en contact avec un liquide de lavage acide, et on soumet les poussières séparées à une lixiviation forcée au moyen de ce liquide de lavage acide, en aval du laveur acide, caractérisé en ce que, avant de les admettre dans le laveur acide, on trempe, à une température comprise entre 50 et 80°C, les fumées dépoussiérées au moyen d'une suspension d'un produit pulvérulent, apte à adsorber le mercure, possédant une concentration comprise en 0,5 et 5 g/l de manière à éliminer entre 50 et 100%, de préférence entre 65 et 99%, du mercure initialement présent dans les fumées dépoussiérées.

Selon d'autres caractéristiques de l'invention :
- le produit pulvérulent est choisi parmi le groupe comprenant les charbons actifs, les cokes de lignite, le coke issu de raffinerie, les zéolites ou les silicates à grande surfaces spécifique ;
- on réalise la trempe au moins en partie grâce à du produit pulvérulent frais ;
- on admet les fumées, extraites du laveur acide, dans un laveur alcalin, dans lequel circule un liquide de lavage alcalin contenant ledit produit pulvérulent, et on réalise la trempe au moins en partie par l'intermédiaire d'une purge dudit liquide de lavage alcalin ;
- on soumet les poussières à une humidification préalable, avant de les soumettre à la lixiviation forcée ;
- on mélange les poussières séparées à des poussières collectées sous une chaudières.

L'invention a également pour objet une installation d'épuration de fumées, comprenant des moyens de séparation d'au moins une partie des poussières initialement présentes dans les fumées, un laveur acide, prévu en aval des moyens de séparation et pourvu de moyens de circulation d'un liquide de lavage acide, ainsi que des moyens de lixiviation forcée des poussières séparées par les moyens de séparation, prévus en aval du laveur acide, caractérisée en ce qu'elle comprend en outre des moyens de trempe des fumées dépoussiérées à une température comprise entre 50 et 80°C, intercalés entre les moyens de séparation et le laveur acide, ces moyens de trempe étant pourvus de moyens d'alimentation en un produit pulvérulent, apte à adsorber le mercure, possédant une concentration comprise entre 0,5 et 5 g/l, de manière à éliminer entre 50 et 100%, de préférence entre 65 et 99%, du mercure contenu dans les fumées dépoussiérées.

Selon d'autres caractéristiques de l'invention :
- les moyens d'alimentation en produit pulvérulent sont mis en communication avec une source de produit pulvérulent frais.
- l'installation comprend en outre un laveur alcalin, pourvu de moyens de circulation d'un liquide de lavage alcalin contenant ledit produit pulvérulent, et les moyens d'alimentation en produit pulvérulent comprennent une purge de ce liquide de lavage alcalin, située en aval du laveur alcalin.

L'invention sera mieux comprise, et des détails en relevant apparaîtront, grâce à la description qui va en être faite de formes non limitatives de réalisation, en relation avec les figures des planches annexées, dans lesquels :
- la figure 1 est une vue schématique, illustrant un procédé d'épuration de fumées conforme à l'invention ; et
- la figure 2 est une vue schématique, analogue à la figure 1, illustrant une variante de réalisation de l'invention.

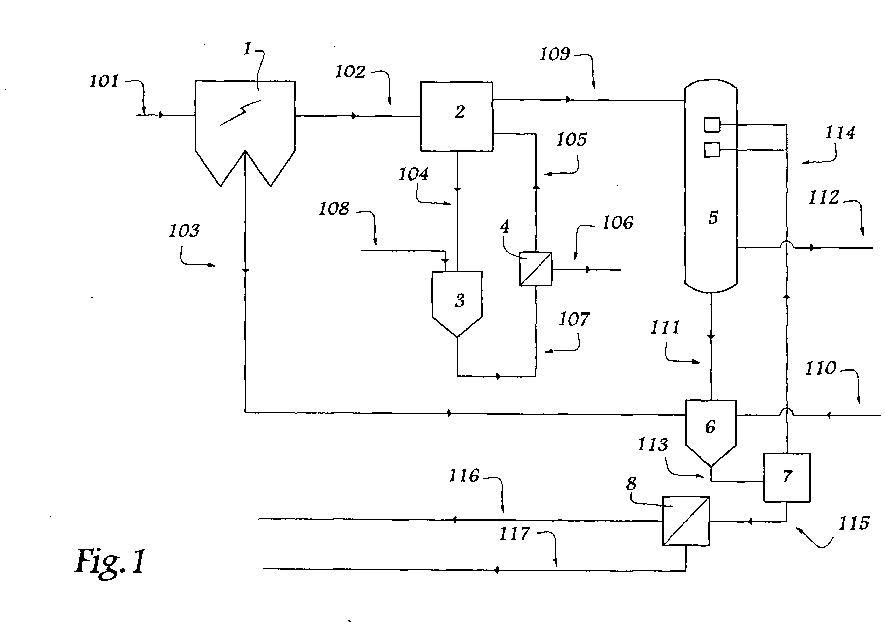

Comme le montre la figure 1, des fumées à épurer issues de la combustion 101 et ayant été refroidies par une chaudière non représentée entre 140° et 300°C, sont introduites dans un séparateur gaz solide, affecté de la référence 1, pouvant être de type filtre électrostatique, filtre ou cyclone. Il est important de noter que, lors du passage à travers la chaudière, des solides sont généralement déposés, et sont communément appelés cendres sous chaudière.

Des équipements de récupération d'énergie peuvent être insérés en amont du séparateur de poussières, sans avoir d'incidence sur le procédé objet de l'invention.

Les poussières 103 à traiter, collectées par ce séparateur, sont dirigées vers un bac 6 où elles sont mises en contact avec une solution acide de lavage utilisée par un laveur de gaz 5. Ce bac 6 peut être intégré au laveur 5 ou séparé de ce dernier.

Les fumées 102, débarrassées de leurs poussières mais contenant encore du mercure à l'état gazeux sont soumises, dans une enceinte 2, à une trempe, ou « quench », qui va refroidir les fumées jusqu'à la température dite de saturation adiabatique, comprise entre 50° et 80°C. Cette trempe est réalisée par une suspension 105 contenant un produit pulvérulent à une concentration comprise entre 0.5 et 5 g/l, sélectionné pour ses capacités à adsorber le mercure, et choisi de préférence parmi le charbon activé, le coke de lignite, un coke issu d'une raffinerie ou les zéolites.

La partie 104 non évaporée de la suspension est retournée à un bac 3. L'alimentation du produit pulvérulent frais 108 est faite à ce bac. De l'eau, non représentée sur la figure peut également être alimentée au bac 3.

Le mélange résultant 107 est repris par des pompes non représentées et alimenté à un séparateur 4 dont le but est d'éliminer, par une purge 106, une partie du solide ayant capté le mercure contenu dans les fumées 102. Le reste 105 est retourné vers la trempe 2. On peut utiliser une séparation supplémentaire, non représentée sur la figure, visant à séparer davantage le solide pulvérulent des liquides du flux 106.

Les fumées 109 débarrassées de la majeure partie de leur mercure, mais contenant encore des polluants acides comme SO₂ et HCl, sont introduites dans le laveur acide 5 et sont mises en contact avec un liquide de lavage 114, pour y être épurées. Le liquide 111, résultant de cette opération de lavage des fumées, ayant capté en particulier l'acide chlorhydrique HCl, est dirigé vers le bac 6, dans lequel se fait l'opération de mise en contact des poussières collectées 103 avec ces liquides.

Il en résulte une lixiviation forcée qui va extraire de ces solides des métaux comme le plomb, le zinc, l'aluminium et le cadmium, ainsi que des sels solubles, donnés ici à titre indicatif et non limitatif. Il est à noter que, sans l'utilisation du produit pulvérulent 108, les fumées 109 contiendraient encore du mercure qui serait absorbé par le laveur 5 et se retrouverait dissout dans 111. Les poussières 103 et plus particulièrement les cendres volantes ayant une affinité marquée pour le mercure, celles-ci se rechargeraient en mercure, ce qui est contraire au but recherché.

Le bac 6 dans lequel se fait la lixiviation forcée des poussières reçoit de manière optionnelle de l'eau, des réactifs de neutralisation et une purge 110 du bac d'un laveur alcalin non représenté.

La majeure partie 114 du flux 113 issu de ce bac est retourné au laveur, en aval d'un séparateur de flux 7, tandis qu'une fraction 115 est alimentée à un séparateur liquide solide 8 fournissant un flux de liquides clairs 116 qui constitue la purge du laveur, et que la fraction contenant les solides lavés 117 est évacuée du procédé. Ainsi, les poussières de 103 se retrouvent-elles dans 117, lavées et débarrassées de la fraction soluble et de la fraction lixiviable des métaux.

Ces solides traités peuvent faire l'objet d'une stabilisation en les filtrant et les rinçant, comme décrit par exemple dans EP-A-0 381 061. Les fumées 112 sortant du laveur acide 5 sont introduites dans un système complémentaire d'épuration des fumées, non représenté.

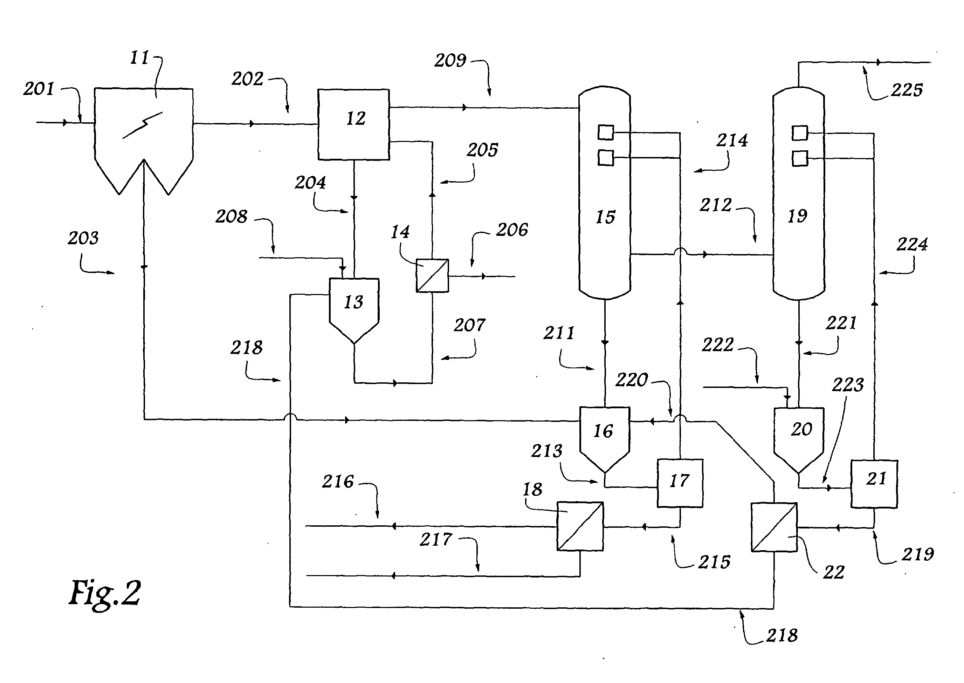

La figure 2 illustre une variante de réalisation de l'invention. Sur cette figure 2, les éléments affectés des références 1 à 8, sur la figure 1, y sont affectés des mêmes numéros de référence augmentés de 10, alors que les éléments affectés des références 101 à 117, sur la figure 1, y sont affectés des mêmes numéros de référence, augmentés de 100.

Les fumées sortant du laveur acide 15 sont introduites dans un laveur alcalin 19 pour y être débarrassées des gaz comme SO₂, ainsi que de polluants comme les dioxines, les furannes et le mercure résiduel, comme décrit dans EP-A-0 585 316. Ce laveur est alimenté en un liquide de lavage 224, contenant une suspension du même produit pulvérulent que celui utilisé dans la trempe 12. En aval du laveur, les liquides effluents 221 sont dirigés vers un bac 20 pouvant être intégré ou séparé du laveur 19.

Ce bac reçoit un appoint de ce produit pulvérulent 222 ainsi que, de manière non représentée sur la figure, des réactifs de neutralisation et/ou de l'eau. Le réactif pulvérulent est utilisé de façon à éliminer les polluants comme les dioxines et les furannes, ainsi que ce qui reste de mercure des fumées.

La majeure partie du flux sortant 223 est recyclée vers le laveur en aval d'un séparateur de flux 21, tandis qu'une fraction 219 est alimentée à un séparateur solide liquide 22 pouvant être un décanteur, un filtre ou un hydrocyclône. La fraction claire 220, qui constitue la purge de déconcentration du laveur 19 est réintroduite dans le bac 16 du laveur acide 15 comme représenté, ou bien en variante évacuée vers un traitement d'eau, tandis que la fraction contenant le solide pulvérulent est retournée au moins en partie au bac 13 de la trempe, par le flux 218.

Les gaz 225 sortant du laveur sont envoyés à une cheminée, ou bien font l'objet d'un traitement complémentaire non mentionné ici.

L'invention n'est pas limitée aux exemples décrits et représentés.

Ainsi, les poussières captées par le séparateur de poussières 1 ou 11 peuvent être soumises à une humidification préalable, avant d'être mises en contact avec les eaux acides du laveur, dans le bac 6 ou 16.

Dans une autre variante, les poussières captées par ce séparateur peuvent être mélangées aux poussières captées sous une chaudière, non représentée. Dans ce cas, elles peuvent également être soumises à une humidification préalable avant d'être mises en contact avec les eaux acides du laveur.

Enfin, l'enceinte 2 ou 12, dans laquelle est réalisée la trempe, peut être intégrée au laveur acide 5 ou 15.

Le produit pulvérulent peut également être introduit à l'intérieur de la conduite 102 ou 202. Dans cette optique, ce produit peut être introduit à l'état sec, ou directement sous forme de suspension.

L'invention permet de réaliser les objectifs précédemment mentionnés.

Ainsi l'invention, qui vise à apporter une solution aux inconvénients des procédés connus, tire judicieusement parti d'un produit pulvérulent, apte à absorber le mercure, lors d'une étape de trempe. Un tel produit pulvérulent fixe alors le mercure et en limite donc fortement la disponibilité lors de l'étape de lavage des cendres, réduisant ainsi la concentration de mercure dans le produit solide traité.

La variante de l'invention, dans laquelle le produit pulvérulent utilisé provient au moins en partie de la purge d'un laveur alcalin, est tout particulièrement avantageuse en termes d'intégration globale du procédé.

A cet égard, il est à noter qu'on pourrait, certes, penser à utiliser une telle purge dans le bac 6 ou 16, déjà décrit par exemple dans EP-A-0 381 601. Cependant, les cendres volantes se trouveraient alors mélangées aux produits pulvérulents ayant adsorbé le mercure et, de façon globale, le produit solide en résultant contiendrait toujours une quantité inacceptable de mercure.

## Revendications

1. Procédé d'épuration de fumées, dans lequel on sépare (en 1 ; 11) au moins une partie des poussières initialement présentes dans ces fumées, on dirige (par 102 ; 202) les fumées ainsi dépoussiérées vers un laveur acide (5 ; 15), dans lequel on les met en contact avec un liquide de lavage acide (114 ; 214), et on soumet les poussières séparées à une lixiviation forcée (en 6 ; 16) au moyen de ce liquide de lavage acide, en aval du laveur acide, **caractérisé en ce que**, avant de les admettre dans le laveur acide (5 ; 15), on trempe (en 2 ; 12), à une température comprise entre 50 et 80°C, les fumées dépoussiérées au moyen d'une suspension (105 ; 205) d'un produit pulvérulent, apte à adsorber le mercure, possédant une concentration comprise en 0,5 et 5 g/l, de manière à éliminer entre 50 et 100%, de préférence entre 65 et 99%, du mercure initialement présent dans les fumées dépoussiérées.

2. Procédé d'épuration de fumées selon la revendication 1, **caractérisé en ce que** le produit pulvérulent est choisi parmi le groupe comprenant les charbons actifs, les cokes de lignite, le coke issu de raffinerie, les zéolites ou les silicates à grande surfaces spécifique.

3. Procédé d'épuration de fumées selon la revendication 1 ou 2, **caractérisé en ce qu'**on réalise la trempe au moins en partie grâce à du produit pulvérulent frais (108).

4. Procédé d'épuration de fumées selon l'une quelconque des revendications précédentes, **caractérisé en ce qu'**on admet (par 212) les fumées, extraites du laveur acide (15), dans un laveur alcalin (19), dans lequel circule un liquide de lavage alcalin (224) contenant ledit produit pulvérulent, et **en ce qu'**on réalise la trempe au moins en partie par l'intermédiaire d'une purge (219) dudit liquide de lavage alcalin.

5. Procédé d'épuration de fumées selon l'une quelconque des revendications précédentes, **caractérisé en qu'**on soumet les poussières à une humidification préalable, avant de les soumettre à la lixiviation forcée (en 6 ; 106).

6. Procédé d'épuration de fumées selon l'une quelconque des revendications précédentes, **caractérisé en qu'**on mélange les poussières (103 ; 203) séparées (en 1 ; 11) à des poussières collectées sous une chaudières.

7. Installation d'épuration de fumées, comprenant des moyens de séparation (1 ; 11) d'au moins une partie des poussières initialement présentes dans les fumées, un laveur acide (5 ; 15), prévu en aval des moyens de séparation et pourvu de moyens de circulation (114 ; 214) d'un liquide de lavage acide, ainsi que des moyens de lixiviation forcée (6 ; 16) des poussières séparées par les moyens de séparation, prévus en aval du laveur acide, **caractérisée en ce qu'**elle comprend en outre des moyens (2 ; 12) de trempe des fumées dépoussiérées à une température comprise entre 50 et 80°C, intercalés entre les moyens de séparation et le laveur acide, ces moyens de trempe étant pourvus de moyens d'alimentation (108 ; 218) en un produit pulvérulent, apte à adsorber le mercure, possédant une concentration comprise entre 0,5 et 5 g/l, de manière, à éliminer entre 50 et 100%, de préférence entre 65 et 99%, du mercure contenu dans les fumées dépoussiérées.

8. Installation d'épuration de fumées selon la revendication 7, **caractérisée en ce que** les moyens d'alimentation en produit pulvérulent sont mis en communication avec une source (108) de produit pulvérulent frais.

9. Installation d'épuration de fumées selon la revendication 7 ou 8, **caractérisée en ce qu'**elle comprend en outre un laveur alcalin (19), pourvu de moyens de circulation (224) d'un liquide de lavage alcalin contenant ledit produit pulvérulent, et **en ce que** les moyens d'alimentation en produit pulvérulent comprennent une purge (219) de ce liquide de lavage alcalin, située en aval du laveur alcalin (19).

## Claims

1. Method for the purification of fumes in which at least some of the dust initially present in these fumes is separated (in 1; 11), and in which the fumes thus de-dusted are directed (by 102; 202) to an acid wash tank (5; 15) in which they are brought into contact with an acid washing liquid (114; 214), and in which the separated dust is subjected to forced leaching (in 6; 16) using this acid washing liquid, downstream of the acid wash tank, **characterised in that** before being introduced into the acid wash tank (5; 15), the de-dusted fumes are chilled (in 2; 12), to a temperature of between 50 and 80°C, by means of a suspension (105; 205) of a pulverulent product capable of adsorbing the mercury and having a concentration of between 0.5 and 5 g/l, so as to eliminate between 50 and 100%, preferably between 65 and 99%, of the mercury initially present in the de-dusted fumes.

2. Method for the purification of fumes according to claim 1, **characterised in that** the pulverulent product is selected from the group comprising activated carbons, coalite, refinery coke, zeolites or silicates with a large specific surface area.

3. Method for the purification of fumes according to claim 1 or 2, **characterised in that** the chilling is realised partially thanks to the fresh pulverulent product (108).

4. Method for the purification of fumes according to any one of the preceding claims, **characterised in that** the fumes, removed from the acid wash tank (15), are introduced (via 212) into an alkaline wash tank (19) in which an alkali treatment liquid (224) containing said pulverulent product circulates, and **in that** the chilling is realised at least partially by means of draining (219) said alkali treatment liquid.

5. Method for the purification of fumes according to any one of the preceding claims, **characterised in that** the dust is subjected to prior humidification before being subjected to the forced leaching (in 6; 106).

6. Method for the purification of fumes according to any one of the preceding claims, **characterised in that** the separated (in 1; 11) dust (103; 203) is mixed with dust collected beneath a boiler.

7. Installation for the purification of fumes, comprising means of separating (1; 11) at least some of the dust initially present in the fumes, an acid wash tank (5; 15), provided downstream of the separation means and provided with means (114; 214) for circulating an acid washing liquid as well as means for forced leaching (6; 16) of the dust separated by the separation means, provided downstream of the acid wash tank, **characterised in that** it also comprises means (2; 12) for chilling de-dusted fumes to a temperature of between 50 and 80°C, interposed between the separation means and the acid wash tank, these chilling means being provided with means of supplying (108; 218) a pulverulent product capable of adsorbing the mercury and having a concentration of between 0.5 and 5 g/l, so as to eliminate between 50 and 100%, preferably between 65 and 99%, of the mercury contained in the de-dusted fumes.

8. Installation for the purification of fumes according to claim 7, **characterised in that** the means of supplying a pulverulent product are linked to a source (108) of fresh pulverulent product.

9. Installation for the purification of fumes according to claim 7 or 8, **characterised in that** it also includes an alkaline wash tank (19) provided with means for circulating (224) an alkali treatment liquid containing said pulverulent product and **in that** the means for supplying the pulverulent product include a drain (219) for this alkali treatment liquid, located downstream of the alkaline wash tank (19).

## Patentansprüche

1. Verfahren zur Rauchreinigung, bei dem mindestens ein Teil des Staubs, der anfänglich in diesem Rauch vorhanden ist, (in 1: 11) separiert wird: der so entstaubte Rauch in Richtung (durch 102; 202) eines Säurewaschers (5: 15) gelenkt wird, in dem er mit einer Säurewaschflüssigkeit (114: 214) in Kontakt gebracht wird, und der separierte Staub einer forcierten Auslaugung (in 6: 16) mittels dieser Säurewaschflüssigkeit unterzogen wird, stromabwärts des Säurewaschers, **dadurch gekennzeichnet, dass** der entstaubte Rauch, bevor er in den Säurewascher (5; 15) einströmt, bei einer Temperatur zwischen 50 und 80 °C abgeschreckt (in 2; 12) wird, mittels einer Suspension (105; 205) eines pulverigen Produkts, das in der Lage ist, das Quecksilber zu adsorbieren, das eine Konzentration zwischen 0,5 und 6 g/l aufweist, sodass zwischen 50 und 100 %, bevorzugt zwischen 65 und 99 % des anfänglich im entstaubten Rauch vorhandenen Quecksilbers entfernt wird.

2. Verfahren zur Rauchreinigung gemäß Anspruch 1, **dadurch gekennzeichnet, dass** das pulverige Produkt ausgewählt ist aus der Gruppe, umfassend Aktivkohle. Braunkohlenkoks, aus der Raffinerie stammende Koks, Zeolithe oder Silicate mit großer spezifischer Oberfläche.

3. Verfahren zur Rauchreinigung gemäß Anspruch 1 oder 2, **dadurch gekennzeichnet, dass** das Abschrecken mindestens zum Teil durch frisches pulveriges Produkt (108) erfolgt.

4. Verfahren zur Rauchreinigung gemäß einem der vorherigen Ansprüche, **dadurch gekennzeichnet, dass** der Rauch (durch 212) aus dem Säurewascher (15) extrahiert, in einen alkalischen Wascher (19) einströmt, in dem eine alkalische Waschflüssigkeit (224) zirkuliert, die das pulverige Produkt enthält, und **dadurch**, dass das Abschrecken mindestens zum Teil mittels des Ablassens (219) der alkalischen Waschflüssigkeit erfolgt.

5. Verfahren zur Rauchreinigung gemäß einem der vorherigen Ansprüche, **dadurch gekennzeichnet, dass** der Staub einer vorherigen Befeuchtung unterzogen wird, bevor er der forcierten Auslaugung (in 6; 106) unterzogen wird.

6. Verfahren zur Rauchreinigung gemäß einem der vorherigen Ansprüche, **dadurch gekennzeichnet, dass** der (in 1; 11) separierte Staub (103; 203) mit Staub gemischt wird, der unter einem Kessel gesammelt wird.

7. Rauchreinigungsanlage, umfassend Separationsmittel (1; 11) für mindestens einen Teil des anfänglich im Rauch vorhandenen Staubs, einen Säurewascher (5; 15), vorgesehen stromabwärts der Separationsmittel und ausgestattet mit Zirkulationsmitteln (114; 214) einer Säurewaschflüssigkeit, sowie Mitteln zur forcierten Auslaugung (6; 16) des separierten Staubs durch die Separationsmittel, vorgesehen stromabwärts des Säurewaschers, **dadurch gekennzeichnet, dass** sie außerdem Mittel (2: 12) zum Abschrecken von entstaubtem Rauch bei einer Temperatur zwischen 50 und 80 °C umfasst, eingefügt zwischen die Separationsmittel und dem Säurewascher, wobei diese Mittel zum Abschrecken Versorgungsmittel (108; 218) für ein pulverigen Produkt aufweisen, das in der Lage ist, das Quecksilber zu adsorbieren, das eine Konzentration zwischen 0,5 und 5 g/l besitzt, sodass zwischen 50 und 100 %, bevorzugt zwischen 65 und 99 % Quecksilber entfernt wird, das im entstaubten Rauch enthalten ist.

8. Rauchreinigungsanlage gemäß Anspruch 7, **dadurch gekennzeichnet, dass** die Versorgungsmittel für das pulverige Produkt mit einer Quelle (108) des frischen pulverigen Produkts in Kommunikation gebracht werden.

9. Rauchreinigungsanlage gemäß Anspruch 7 oder 8, **dadurch gekennzeichnet, dass** sie außerdem einen alkalischen Wascher (19) umfasst, ausgestattet mit Zirkulationsmitteln (224) einer alkalischen Waschflüssigkeit, die das pulverige Produkt enthält, und **dadurch**, dass die Versorgungsmittel für das pulverförmige Produkt einen Ablass (219) für diese alkalische Waschflüssigkeit, stromabwärts des alkalischen Waschers (19) umfassen.
